(19) Europäisches Patentamt
European Patent Office
Office européen des brevets

(11) **EP 1 318 323 B1**

(12) **FASCICULE DE BREVET EUROPEEN**

(45) Date de publication et mention
de la délivrance du brevet:
**10.12.2008 Bulletin 2008/50**

(51) Int Cl.:
***F16F 7/12*** *(2006.01)*   ***B60R 19/18*** *(2006.01)*

(21) Numéro de dépôt: **02292821.2**

(22) Date de dépôt: **13.11.2002**

(54) **Dispositif d'absorption d'énergie**

Kraftabsorptionsvorrichtung

Energy absorbing device

(84) Etats contractants désignés:
**AT BE BG CH CY CZ DE DK EE ES FI FR GB GR
IE IT LI LU MC NL PT SE SK TR**

(30) Priorité: **05.12.2001 FR 0115724**

(43) Date de publication de la demande:
**11.06.2003 Bulletin 2003/24**

(73) Titulaire: **Peugeot Citroën Automobiles SA
92200 Neuilly sur Seine (FR)**

(72) Inventeur: **Fromentin, Bernard
78620 L'Etang-La-Ville (FR)**

(56) Documents cités:
**EP-A- 0 270 691      WO-A-00/32444
US-A- 3 938 841      US-A- 4 652 032
US-A- 4 946 727      US-A- 4 974 891**

**Description**

La présente invention concerne les systèmes d'absorption d'énergie cinétique, notamment utilisables pour amortir le choc entre un véhicule automobile et un obstacle.

Plus précisément, l'invention concerne, selon un premier de ses aspects, un dispositif d'absorption d'énergie cinétique formé d'un empilement comprenant une poutre rigide s'étendant suivant une dimension longitudinale, un absorbeur recouvrant la poutre, et une coquille externe recouvrant au moins partiellement l'absorbeur, l'empilement présentant, dans une section transversale par rapport à la dimension longitudinale, une épaisseur s'étendant suivant un plan longitudinal médian de la poutre et une largeur s'étendant transversalement à ce plan longitudinal médian, et ce dispositif subissant, en réponse à un choc d'intensité supérieure à une valeur minimale déterminée, appliqué sur la coquille et dirigé vers la poutre, des déformations de la coquille et de l'absorbeur se traduisant notamment par une compression de l'empilement suivant son épaisseur.

Des dispositifs de ce type sont connus à ce jour et notamment utilisés à l'avant des véhicules automobiles, comme exposé dans le document US 3 938 851.

L'évolution technique de ces dispositifs est aujourd'hui guidée par deux préoccupations, à savoir d'une part celle d'augmenter leurs performances en termes d'absorption d'énergie, et d'autre part celle de leur donner des dimensions aussi modestes que possible.

L'invention s'inscrit dans ce contexte, mais poursuit plus particulièrement le but de proposer un dispositif d'absorption d'énergie cinétique susceptible d'équiper un mobile quelconque, et permettant de préserver au maximum l'intégrité d'un obstacle fragile que ce mobile pourrait rencontrer à vitesse relativement réduite.

A cette fin, le dispositif d'absorption d'énergie cinétique de l'invention, par ailleurs conforme à la définition générique qu'en donne le préambule ci-dessus, est essentiellement caractérisé en ce que la coquille et l'absorbeur sont réalisés dans des matériaux élastiquement déformables, en ce que chaque élément de l'empilement que constituent séparément la poutre, l'absorbeur et la coquille présente un premier voile, un second voile, et une base, en ce que l'absorbeur et la coquille définissent des volumes libres respectifs dans lesquels s'inscrivent respectivement la poutre et l'absorbeur, les bases étant empilées suivant l'épaisseur de l'empilement, les premiers voiles étant empilés suivant la largeur de l'empilement, d'un premier côté du plan longitudinal médian, et les seconds voiles étant empilés suivant la largeur de l'empilement, d'un second côté du plan longitudinal médian, en ce que les premier et second voiles de l'absorbeur présentent des premier et second bords respectifs par lesquels ces voiles sont respectivement fixés aux premier et second voiles de la poutre, en ce que la base de l'absorbeur est espacée de la base de la poutre suivant l'épaisseur de l'empilement, en ce que les voiles de la coquille sont espacés des voiles de l'absorbeur suivant la largeur de l'empilement, et en ce que la coquille est fixée à l'empilement de manière à permettre une déformation de sa base dans le plan longitudinal médian.

Par exemple, la coquille est fixée par sa base à la base de l'absorbeur.

Le volume libre défini par l'absorbeur est de préférence convexe, les deux voiles de l'absorbeur présentant, en section transversale, des concavités respectives tournées vers ce volume libre.

Le dispositif d'absorption de l'invention peut comporter des moyens d'écartement disposés entre le premier voile de l'absorbeur et le premier voile de la coquille.

Ces moyens d'écartement comprennent par exemple des entretoises et une traverse, les entretoises étant fixées à l'absorbeur et s'étendant vers le premier voile de la coquille, et la traverse reliant les entretoises à distance de l'absorbeur et offrant un appui au premier voile de la coquille.

Il est par ailleurs avantageux de faire en sorte que les premier et second voiles de la poutre présentent des premier et second rebords respectifs, distants de la base de la poutre et s'étendant dans des directions transversales opposées, que les premier et second voiles de l'absorbeur présentent des premier et second rebords respectifs, distants de la base de l'absorbeur et s'étendant dans des directions transversales opposées, respectivement en regard des premier et second rebords de la poutre, et que l'absorbeur soit fixé à la poutre par fixation des rebords de l'absorbeur sur les rebords correspondants de la poutre.

Les entretoises peuvent alors prendre appui sur le premier voile de la poutre, être fixées au premier rebord de l'absorbeur, et traverser des échancrures pratiquées dans le premier voile de l'absorbeur.

Dans ce cas, les premier et second voiles de la poutre peuvent diverger l'un de l'autre à partir de la base de cette poutre.

Cependant, les premier et second voiles de la poutre peuvent aussi être respectivement recouverts par les premier et second voiles de l'absorbeur en des première et seconde zones de recouvrement respectivement définies en bordure des premier et second voiles de l'absorbeur, l'absorbeur étant fixé à la poutre par fixation des première et seconde zones de recouvrement sur les premier et second voiles de la poutre.

Dans ce cas, les entretoises sont avantageusement fixées au premier voile de l'absorbeur dans la première zone de recouvrement, les premier et second voiles de la poutre pouvant être sensiblement parallèles l'un à l'autre.

L'absorbeur et la coquille peuvent être réalisés dans un polymère, tel qu'un polypropylène, et formés par injection.

De préférence, l'absorbeur présente un module d'Young compris entre 750 et 1250 MPa, les voiles de l'absorbeur ayant par exemple une épaisseur comprise entre 2 et 5 millimètres.

Par ailleurs, l'absorbeur est de préférence cintré, c'est-à-dire qu'il présente une épaisseur maximale dans un plan transversal médian de l'empilement et progressivement décroissante à distance croissante de ce plan.

L'absorbeur peut aussi former un corps creux, auquel cas les deux voiles de l'absorbeur sont par exemple raccordés, à distance de la base, par deux parois internes reliées par un fond, le volume libre défini par l'absorbeur étant délimité par les parois internes et le fond.

L'absorbeur ainsi constitué peut être réalisé dans un polymère, tel qu'un polypropylène, et être formé par soufflage.

La coquille est de préférence fixée sur la base de l'absorbeur par des moyens de fixation réversible, tels que des moyens d'encliquetage.

Le dispositif d'absorption de l'invention peut être appliqué à la réalisation d'un pare-chocs de véhicule automobile, la poutre étant solidaire du châssis du véhicule et s'étendant suivant une direction horizontale.

Dans cette application, il est possible de faire en sorte que ce dispositif présente un effort de compression sensiblement constant de l'empilement formé par la coquille, l'absorbeur et la poutre, dans toute une plage de compression élastique de cet empilement, la poutre formant un élément de référence qui ne subit lui-même qu'une compression élastique totalement négligeable.

Il est ainsi possible de protéger un obstacle fragile, tel que les jambes d'un piéton, heurté à vitesse relativement réduite par un véhicule automobile équipé du dispositif de l'invention, sans pour autant devoir donner à ce dispositif des dimensions inacceptables.

D'autres caractéristiques et avantages de l'invention ressortiront clairement de la description qui en est faite ci-après, à titre indicatif et nullement limitatif, en référence aux dessins annexés, dans lesquels:

- la Figure 1 est une vue en coupe transversale d'un dispositif d'absorption d'énergie cinétique conforme à un premier mode de réalisation possible de l'invention;
- la Figure 2 est une vue en coupe transversale d'un dispositif d'absorption d'énergie cinétique conforme à un second mode de réalisation possible de l'invention;
- la Figure 3 est une vue en coupe transversale d'un dispositif d'absorption d'énergie cinétique conforme à une première variante du premier mode de réalisation de l'invention illustré à la figure 1;
- la Figure 4 est une vue partielle en perspective de l'absorbeur et des moyens d'écartement du dispositif illustré à la figure 3;
- la Figure 5 est une vue partielle en perspective d'un dispositif d'absorption d'énergie cinétique conforme à une seconde variante du premier mode de réalisation de l'invention;
- la Figure 6 est une vue en perspective d'un absorbeur utilisable dans un dispositif d'absorption d'énergie cinétique conforme au premier mode de réalisation de l'invention;
- la Figure 7 illustre plusieurs coupes de l'absorbeur de la figure 6, les coupes étant réalisées en différents points de la dimension longitudinale du dispositif;
- la Figure 8 est une vue en perspective d'une coupe médiane d'un absorbeur utilisable dans un dispositif d'absorption d'énergie cinétique conforme au premier mode de réalisation de l'invention, représenté dans un état déformé;
- la Figure 9A est un diagramme schématique illustrant la loi qui relie l'amplitude de la compression subie par la coquille d'un dispositif conforme à l'invention, à la force de compression qui s'exerce sur cette coquille;
- la Figure 9B est un diagramme schématique illustrant la loi qui relie l'amplitude de la compression subie par l'absorbeur d'un dispositif conforme à l'invention, à la force de compression qui s'exerce sur cet absorbeur;
- la Figure 9C est un diagramme schématique illustrant la loi qui relie l'amplitude de la compression subie par un dispositif conforme à l'invention, à la force de compression qui s'exerce sur ce dispositif;
- la Figure 10A est un diagramme illustrant, en fonction de la course de déformation X, la force de résistance F qu'oppose à cette déformation, lors d'un choc avec la jambe d'un piéton à une vitesse de 40 kilomètres par heure, un dispositif conforme à la figure 1 et dont la coquille et l'absorbeur ont chacun une épaisseur de 3 millimètres;
- la Figure 10B est un diagramme illustrant, en fonction de la course de déformation X, la force de résistance F qu'oppose à cette déformation, lors d'un choc avec la jambe d'un piéton à une vitesse de 40 kilomètres par heure, un dispositif conforme à la figure 2 et dont la coquille et l'absorbeur ont chacun une épaisseur de 3 millimètres ;
- la figure 11A est une vue en perspective d'une coupe médiane d'un absorbeur selon une autre variante ; et
- la figure 11B est une vue en coupe partielle agrandie de l'absorbeur illustré à la figure 11A.

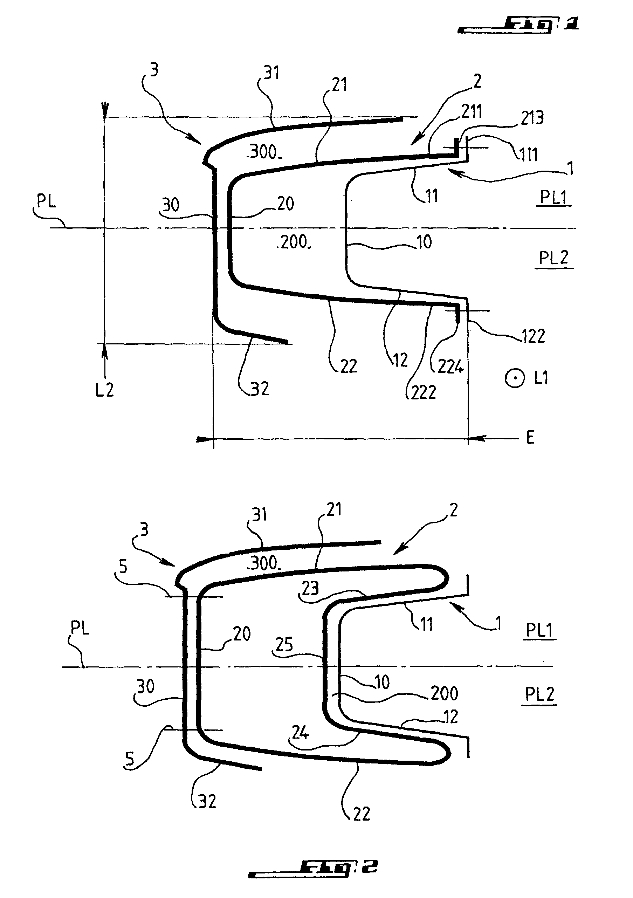

Comme annoncé précédemment, l'invention concerne un dispositif d'absorption d'énergie cinétique formé d'un empilement comprenant (figures 1 à 3) une poutre rigide 1, un absorbeur 2, et une coquille externe 3.

La poutre rigide 1, typiquement réalisée en acier, présente une forme allongée et s'étend donc suivant une dimension longitudinale L1.

Pour donner un sens à la dimension L1 dans le cas classique où la poutre 1 est cintrée, la direction de cette dimension est considérée comme étant définie en chaque point de la poutre 1.

La dimension L1 est ainsi perpendiculaire au plan des figures 1 à 3, et le plan de ces figures constitue une coupe transversale de l'empilement qui forme le dispositif de l'invention.

L'absorbeur 2 recouvre la poutre 1, et la coquille externe 3 recouvre elle-même l'absorbeur 2, au moins de façon partielle.

Comme le montrent les figures 1 à 3, l'empilement présente, dans sa section transversale, une épaisseur E, qui s'étend parallèlement au plan longitudinal médian PL de la poutre, et une largeur L2 qui s'étend transversalement au plan longitudinal médian PL.

Lorsqu'il reçoit un choc d'intensité suffisante, appliqué sur la coquille 3 et dirigé vers la poutre 1, ce dispositif subit des déformations de la coquille 3 et de l'absorbeur 2, qui se traduisent au moins par une compression de l'empilement suivant son épaisseur E.

Selon l'invention, la coquille 3 et l'absorbeur 2 sont réalisés dans des matériaux élastiquement déformables.

Par exemple, l'absorbeur 2 et la coquille 3 peuvent être réalisés dans un polymère, tel qu'un polypropylène.

L'absorbeur 2 présente de préférence un module d'Young compris entre 750 et 1250 MPa, typiquement de l'ordre de 1000 MPa, et une épaisseur de matière comprise entre 2 et 5 millimètres, typiquement de l'ordre de 3 millimètres.

Chaque élément de l'empilement que constituent séparément la poutre 1, l'absorbeur 2 et la coquille 3 présente deux voiles reliés par une base commune.

L'absorbeur 2 définit un volume libre 200 dans lequel s'inscrit la poutre 1, et la coquille 3 définit un volume libre 300 dans lequel s'inscrit l'absorbeur 2.

La base 10 de la poutre 1, la base 20 de l'absorbeur 2, et la base 30 de la coquille 3 sont empilées suivant l'épaisseur E de l'empilement.

Le voile supérieur 11 de la poutre 1, le voile supérieur 21 de l'absorbeur 2, et le voile supérieur 31 de la coquille 3 sont empilés suivant la largeur L2 de l'empilement, dans le demi-espace supérieur PL1 délimité par le plan longitudinal médian PL.

Le voile inférieur 12 de la poutre 1, le voile inférieur 22 de l'absorbeur 2, et le voile inférieur 32 de la coquille 3 sont empilés suivant la largeur L2 de l'empilement, dans le demi-espace inférieur PL2 délimité par le plan longitudinal médian PL.

Les voiles 21 et 22 de l'absorbeur 2 présentent des bords respectifs, 211 et 222, par lesquels ces voiles 21 et 22 sont respectivement fixés aux voiles correspondants, 11 et 12, de la poutre 1.

La base 20 de l'absorbeur 2 est espacée de la base 10 de la poutre 1 suivant l'épaisseur E de l'empilement, tandis que les voiles 31 et 32 de la coquille 3 sont espacés des voiles 21 et 22 de l'absorbeur 2 suivant la largeur L2 de l'empilement.

Enfin, la coquille 3 est fixée à l'empilement de manière à permettre une déformation de la base 30 de cette coquille dans le plan longitudinal médian PL, la base 30 de la coquille 3 pouvant ainsi être fixée à la base 20 de l'absorbeur 2, par exemple au moyen d'organes de fixation réversible par encliquetage 5.

Dans ces conditions, la coquille 3, grâce au fait qu'elle peut se déformer élastiquement dans le plan longitudinal médian PL, montre, dans une plage déterminée, un comportement voisin du comportement élastique linéaire classique.

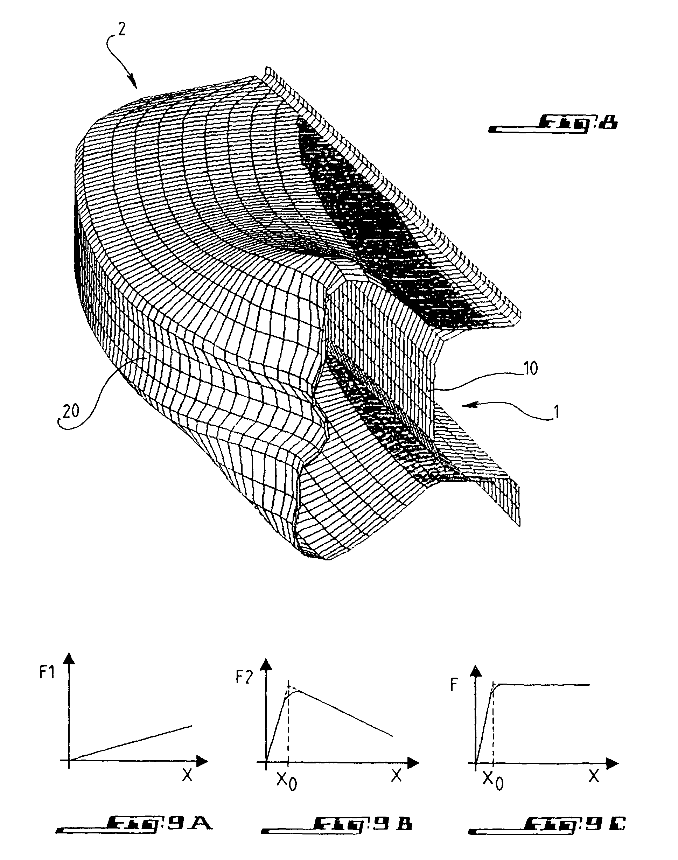

Ce comportement élastique, illustré par la figure 9A, est défini par la loi affine bien connue :

$$F1 = k1 \cdot X,$$

qui relie la force F1 que la coquille 3 oppose au choc à l'amplitude X de la déformation que subit la coquille, et qui se traduit par une compression, suivant son épaisseur E, de l'empilement que forme le dispositif, par l'intermédiaire de la raideur k1 que présente la coquille 3.

L'absorbeur 2, dont les bords 211 et 222 sont fixés à la poutre rigide 1, montre quant à lui, dans sa plage de comportement élastique, un comportement élastique plus complexe résultant du fait qu'il se déforme, sous l'effet du choc, par compression puis par flambage de ses voiles 21 et 22.

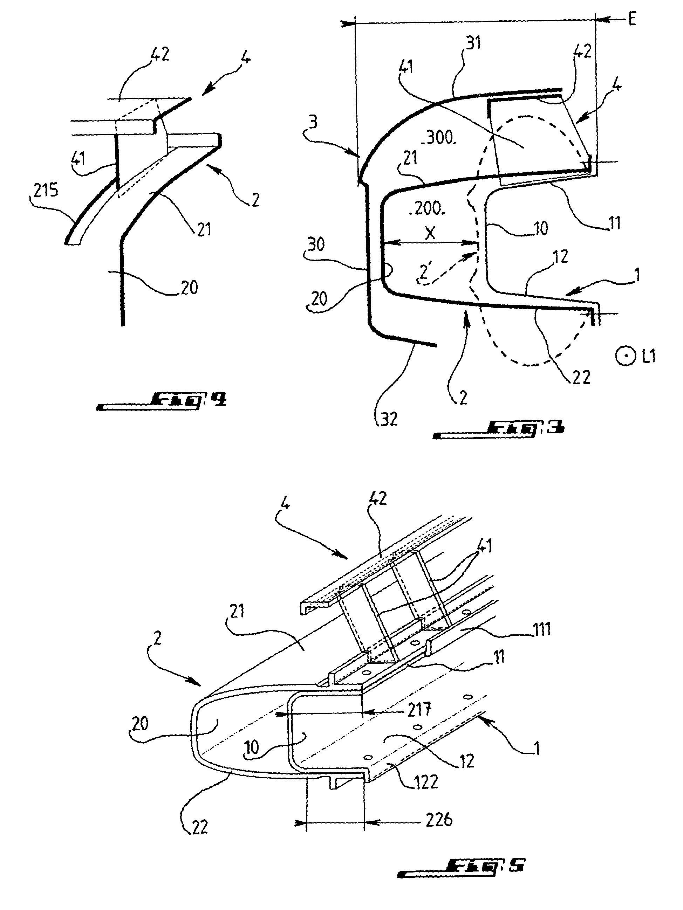

A la fin du choc, l'absorbeur 2 peut ainsi prendre la position indiquée par la référence 2' sur la figure 3 et illustrée par la figure 8.

Le comportement de l'absorbeur 2 est celui illustré par la figure 9B, dont les deux segments de droite sont définis par une loi de la forme :

$$F2 = k2 \cdot (1-\alpha) \cdot X + k2 \cdot X0 \cdot \alpha - k3 \cdot (X-X0) \cdot \alpha$$

c'est-à-dire encore :

$$F2 = [k2.(1-\alpha) - k3.\alpha].X + [k2+k3].\alpha.X0,$$

où F2 est la force que l'absorbeur 2 oppose au choc, où X est l'amplitude de la déformation que subit l'absorbeur 2, où X0 est l'amplitude de la déformation subie par l'absorbeur 2 au moment où les voiles 21 et 22 de l'absorbeur flambent, où k2 est la raideur que présente l'absorbeur avant que ses voiles ne flambent, où k3 est la raideur que présente l'absorbeur après que ses voiles ont commencé à flamber, et où $\alpha$ est une fonction prenant une valeur nulle avant le flambage des voiles 21 et 22, la valeur unité après le flambage, et une valeur évoluant de zéro à un au cours du flambage.

L'arrondi que présente la courbe expérimentale entre les deux segments de droite a un rayon de courbure non constant, dépendant de multiples paramètres.

Dans le dispositif de l'invention, l'absorbeur 2 et la coquille 3 sont montés en parallèle, au sens mécanique du terme, de sorte que leurs forces de résistance à la déformation s'ajoutent.

Dans ces conditions, le comportement élastique du dispositif de l'invention, illustré par la figure 9C, est défini par une loi de la forme :

F = F1 + F2, et suit donc une loi dont les deux segments de droite sont définis par :
F = [k1 + k2. (1-$\alpha$) - k3. $\alpha$]. X + [k2+k3] . $\alpha$. X0,
où F est la force que le dispositif de l'invention oppose au choc pour une déformation d'amplitude X de la coquille et de l'absorbeur suivant l'épaisseur E de l'empilement.
Si k1 = k3, alors les grandeurs F et X sont liées l'une à l'autre par la loi :

$$F = (k1 + k2).[(1-\alpha).X + \alpha.X0],$$

qui est indépendante de la déformation X dès que cette déformation dépasse la valeur X0 qu'elle a lorsque le flambage s'amorce, et qui est illustrée par le diagramme de la figure 9C.

Plus précisément, pour toute valeur de X supérieure à X0, pour laquelle $\alpha$ = 1, la force F est constante et de valeur égale à (k1 + k2). X0.

En d'autres termes, le dispositif de l'invention peut donc être dimensionné de façon telle que l'effort qu'il oppose à sa compression dans le sens de son épaisseur E soit limité à une valeur sensiblement constante et indépendante de l'amplitude de cette compression, au moins dans sa plage de comportement élastique.

Pour assurer le flambage des voiles 21 et 22 de l'absorbeur 2 et faire en sorte que l'effort résistant que le dispositif oppose au choc atteigne rapidement sa valeur maximale, le volume libre 200 défini par l'absorbeur 2 est de préférence convexe, et conformé de façon telle que les deux voiles 21 et 22 de l'absorbeur 2 présentent, en section transversale, des concavités respectives tournées vers ce volume libre 200.

Comme le montrent les figures 3 à 5, le voile supérieur 31 de la coquille 3 est disposé et maintenu à distance du voile supérieur 21 de l'absorbeur 2 au moyen d'organes d'écartement 4, par exemple essentiellement constitués par des entretoises 41 et une traverse 42.

Les entretoises 41 sont fixées à l'absorbeur 2 et s'étendent en direction du voile supérieur 31 de la coquille 3, tandis que la traverse 42 relie les entretoises 41 les unes aux autres à distance de l'absorbeur 2, et offre un appui au voile supérieur 31 de la coquille 3.

Dans le mode de réalisation illustré aux figures 1 et 3, les voiles supérieur et inférieur, 11 et 12, de la poutre 1 présentent des rebords correspondants, 111 et 122, distants de la base 10 de la poutre 1 et s'étendant dans des directions transversales opposées.

De même, les voiles supérieur et inférieur 21 et 22 de l'absorbeur 2 présentent des rebords correspondants, 213 et 224, distants de la base 20 de l'absorbeur 2 et s'étendant dans des directions transversales opposées, respectivement en regard des rebords supérieur et inférieur, 111 et 122, de la poutre 1.

Cet agencement permet, de façon simple, de rendre l'absorbeur 2 solidaire de la poutre 1 en fixant les rebords 213 et 224 de l'absorbeur 2 sur les rebords correspondants 111 et 122 de la poutre 1.

Les entretoises 41 prennent de préférence appui sur le voile supérieur 11 de la poutre 1 (figure 3), sont fixées au rebord supérieur 213 de l'absorbeur 2, et traversent des échancrures 215 (fig.4) pratiquées dans le voile supérieur 21 de l'absorbeur 2.

Dans ce mode de réalisation, les voiles 11 et 12 de la poutre 1 peuvent diverger l'un de l'autre à partir de la base 10 de cette poutre 1.

La figure 5 illustre un mode de réalisation dans lequel les voiles 11 et 12 de la poutre 1 sont sensiblement parallèles l'un à l'autre.

Cet agencement favorise la possibilité de prévoir que les voiles 11 et 12 de la poutre 1 soient recouverts par les voiles correspondants 21 et 22 de l'absorbeur 2 en des zones de recouvrement respectives, 217 et 226, définies en bordure des voiles correspondants 21 et 22 de l'absorbeur 2.

Dans ce cas, il est aisé de rendre l'absorbeur 2 solidaire de la poutre 1 par fixation des zones de recouvrement 217 et 226 de l'absorbeur 2 sur les voiles correspondants 11 et 12 de la poutre 1, les entretoises 41 étant fixées au voile supérieur 21 de l'absorbeur 2 dans la zone de recouvrement 217.

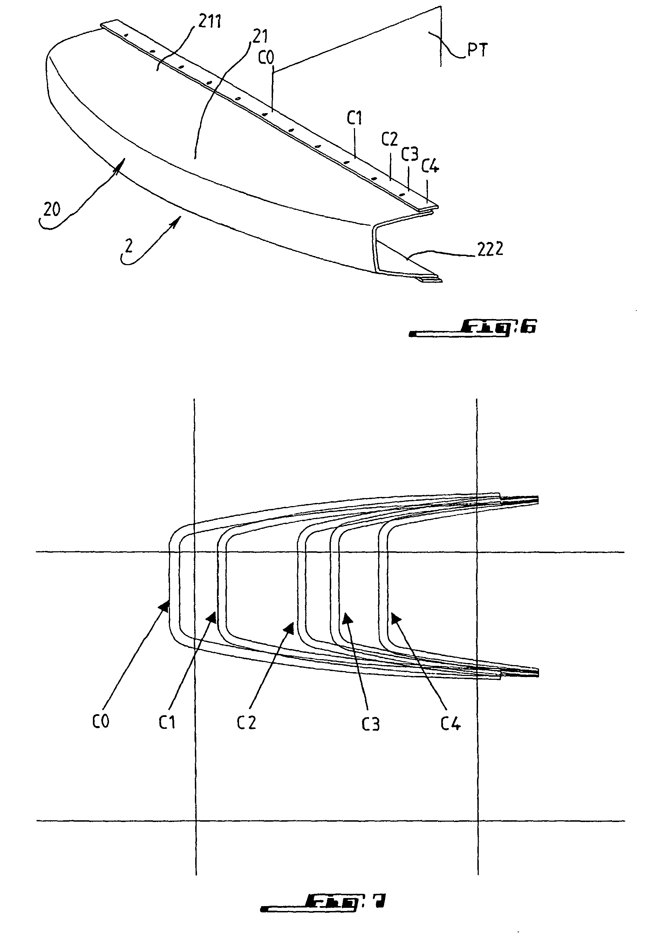

Comme le montrent les figures 6 et 7, l'absorbeur 2 présente une épaisseur variable dans le plan longitudinal médian PL.

Il convient ici de souligner la distinction qui doit être faite entre l'épaisseur, dont il est ici question, de l'absorbeur 2 lui-même, c'est-à-dire son encombrement dans le sens de l'épaisseur E de l'empilement, et l'épaisseur de la matière dont il est constitué, sensiblement plus faible et dont il a été indiqué supra qu'elle pouvait être de l'ordre de 3 millimètres.

La figure 7 illustre différentes coupes transversales C0 à C4 de l'absorbeur 2, en différents points correspondants repérés sur la figure 6, ces deux figures permettant de constater que l'absorbeur 2 présente une épaisseur maximale dans le plan transversal médian PT de l'empilement, et progressivement décroissante à distance croissante de ce plan PT.

On notera que l'absorbeur est généralement cintré pour suivre la forme extérieure de la coquille, ce qui est plus particulièrement le cas lorsque, comme on le verra ci-dessous, le dispositif de l'invention est appliqué à la réalisation d'un pare-chocs de véhicule automobile, la coquille constituant alors la peau extérieure du pare-chocs.

Dans le dispositif d'absorption de l'invention tel qu'illustré aux figures 1 et 3 à 8, l'absorbeur 2 peut être formé par injection d'un polymère approprié, tel qu'un polypropylène, comme déjà indiqué plus haut.

Dans le dispositif d'absorption de l'invention tel qu'illustré à la figure 2, l'absorbeur 2, qui peut toujours être constitué d'un polymère tel qu'un polypropylène, est en revanche plus aisément réalisé par soufflage dans la mesure où il forme un corps creux.

Dans ce cas, les voiles 21 et 22 de cet absorbeur sont raccordés, à distance de la base 20, par deux parois internes 23 et 24 reliées par un fond 25, le volume libre 200 défini par l'absorbeur 2 étant alors délimité par les parois internes 23, 24 et par le fond 25.

Le dispositif d'absorption de l'invention peut être appliqué à la réalisation d'un pare-chocs de véhicule automobile, la poutre étant solidaire du châssis (non représenté) du véhicule et s'étendant horizontalement.

Dans ce cas, le dispositif de l'invention permet de réaliser un pare-chocs présentant un effort de compression contrôlé, et par exemple sensiblement constant, dans toute la plage de compression élastique que forme l'empilement de l'absorbeur 2 et de la coquille 3 sur la poutre 1.

La courbe de la figure 9C, qui représente la loi qui relie l'amplitude de la compression subie par un dispositif conforme à l'invention, à la force de compression qui s'exerce sur ce dispositif permet de comprendre deux résultats fondamentaux de l'invention.

Le premier réside dans le fait que la forme de cette courbe permet de maximiser la quantité d'énergie cinétique susceptible d'être absorbée par un dispositif conforme à l'invention, et qui est proportionnelle à la surface que cette courbe délimite avec l'axe des abscisses de cette figure 9C.

Et le second résultat réside dans la possibilité de contrôler à volonté l'évolution de cette courbe par le contrôle des raideurs k1, k2, et k3 que présentent la coquille et l'absorbeur.

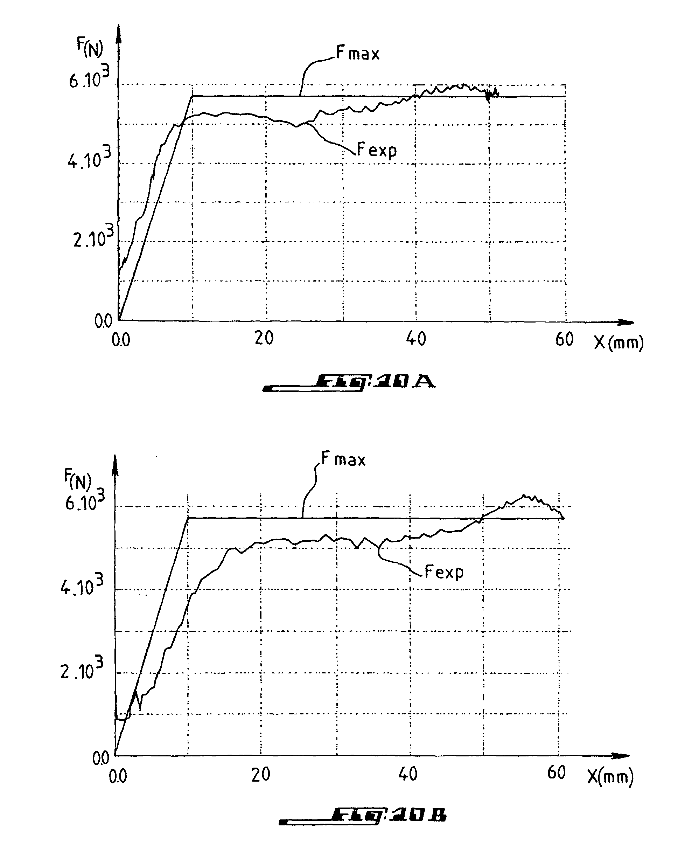

La pertinence de ces résultats est démontrée par les courbes des figures 10A et 10B.

La figure 10A illustre, en fonction de la course de déformation X, la force de résistance Fexp (obtenue par simulation) qu'oppose à cette déformation, lors d'un choc avec la jambe d'un piéton à une vitesse de 40 kilomètres par heure, le dispositif illustré à la figure 1 et dont la coquille et l'absorbeur ont chacun une épaisseur de 3 millimètres.

Comme le montre cette figure, la force Fexp est du même ordre de grandeur que la force maximale souhaitée Fmax, et reste pratiquement toujours inférieure à 6000 newtons.

La figure 10B est un diagramme semblable à celui de la figure 10A, tracé pour le dispositif illustré à la figure 2 et dont la coquille et l'absorbeur ont chacun une épaisseur de 3 millimètres.

A nouveau, la force Fexp est du même ordre de grandeur que la force maximale souhaitée Fmax, et reste pratiquement toujours inférieure à 6000 newtons.

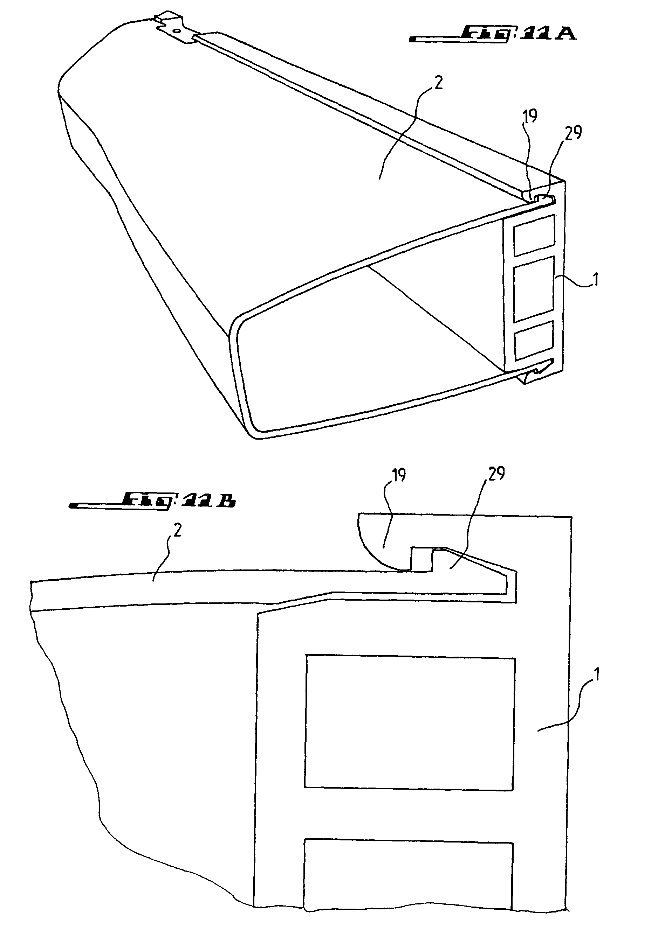

Les figures 11A et 11B illustrent une variante de l'absorbeur dans laquelle l'absorbeur est monté par coulissement longitudinal sur une poutre droite en aluminium réalisée par extrusion.

La liaison absorbeur-poutre est donc du type glissière à reliefs coopérants 19, 29, et ne requiert ni vis ni autres éléments d'assemblage.

Cette variante présente l'intérêt d'offrir un montage très aisé de l'absorbeur sur la poutre, qui peut être droite ou cintrée avec un rayon de courbure constant.

**EP 1 318 323 B1**

**Revendications**

1. Dispositif d'absorption d'énergie cinétique formé d'un empilement comprenant une poutre rigide (1) s'étendant suivant une dimension longitudinale (L1), un absorbeur (2) recouvrant la poutre (1), et une coquille externe (3) recouvrant au moins partiellement l'absorbeur (2), l'empilement présentant, dans une section transversale par rapport à la dimension longitudinale (L1), une épaisseur (E) s'étendant suivant un plan longitudinal médian (PL) de la poutre (1) et une largeur (L2) s'étendant transversalement à ce plan longitudinal médian (PL), et ce dispositif subissant, en réponse à un choc d'intensité supérieure à une valeur minimale déterminée, appliqué sur la coquille (3) et dirigé vers la poutre (1), des déformations de la coquille (3) et de l'absorbeur (2) se traduisant notamment par une compression de l'empilement suivant son épaisseur (E), **caractérisé en ce que** la coquille (3) et l'absorbeur (2) sont réalisés dans des matériaux élastiquement déformables, **en ce que** chaque élément de l'empilement que constituent séparément la poutre (1), l'absorbeur (2) et la coquille (3) présente un premier voile (11, 21, 31), un second voile (12, 22, 32), et une base (10, 20, 30), **en ce que** l'absorbeur (2) et la coquille (3) définissent des volumes libres respectifs (200, 300) dans lesquels s'inscrivent respectivement la poutre (1) et l'absorbeur (2), les bases (10, 20, 30) étant empilées suivant l'épaisseur (E) de l'empilement, les premiers voiles (11, 21, 31) étant empilés suivant la largeur (L2) de l'empilement, d'un premier côté (PL1) du plan longitudinal médian (PL), et les seconds voiles (12, 22, 32) étant empilés suivant la largeur (L2) de l'empilement, d'un second côté (PL2) du plan longitudinal médian (PL), **en ce que** les premier et second voiles (21, 22) de l'absorbeur (2) présentent des premier et second bords respectifs (211, 222) par lesquels ces voiles (21, 22) sont respectivement fixés aux premier et second voiles (11, 12) de la poutre (1), **en ce que** la base (20) de l'absorbeur (2) est espacée de la base (10) de la poutre (1) suivant l'épaisseur (E) de l'empilement, **en ce que** les voiles (31, 32) de la coquille (3) sont espacés des voiles (21, 22) de l'absorbeur (2) suivant la largeur (L2) de l'empilement, et **en ce que** la coquille (3) est fixée à l'empilement de manière à permettre une déformation de sa base (30) dans le plan longitudinal médian (PL).

2. Dispositif d'absorption suivant la revendication 1, **caractérisé en ce que** la coquille (3) est fixée par sa base (30) à la base (20) de l'absorbeur (2).

3. Dispositif d'absorption suivant la revendication 1 ou 2, **caractérisé en ce que** le volume libre (200) défini par l'absorbeur (2) est convexe, les deux voiles (21, 22) de l'absorbeur (2) présentant, en section transversale, des concavités respectives tournées vers ce volume libre (200).

4. Dispositif d'absorption suivant l'une quelconque des revendications précédentes, **caractérisé en ce qu'**il comporte des moyens d'écartement (4) disposés entre le premier voile (21) de l'absorbeur (2) et le premier voile (31) de la coquille (3).

5. Dispositif d'absorption suivant la revendication 4, **caractérisé en ce que** les moyens d'écartement (4) comprennent des entretoises (41) et une traverse (42), les entretoises (41) étant fixées à l'absorbeur (2) et s'étendant vers le premier voile (31) de la coquille (3), et la traverse (42) reliant les entretoises (41) à distance de l'absorbeur (2) et offrant un appui au premier voile (31) de la coquille (3).

6. Dispositif d'absorption suivant l'une quelconque des revendications précédentes, **caractérisé en ce que** les premier et second voiles (11, 12) de la poutre (1) présentent des premier et second rebords respectifs (111, 122), distants de la base (10) de la poutre (1) et s'étendant dans des directions transversales opposées, **en ce que** les premier et second voiles (21, 22) de l'absorbeur (2) présentent des premier et second rebords respectifs (213, 224), distants de la base (20) de l'absorbeur (2) et s'étendant dans des directions transversales opposées, respectivement en regard des premier et second rebords (111, 122) de la poutre (1), et **en ce que** l'absorbeur (2) est fixé à la poutre (1) par fixation des rebords (213, 224) de l'absorbeur (2) sur les rebords correspondants (111, 122) de la poutre (1).

7. Dispositif d'absorption suivant les revendications 5 et 6, **caractérisé en ce que** les entretoises (41) prennent appui sur le premier voile (11) de la poutre (1), sont fixées au premier rebord (213) de l'absorbeur (2), et traversent des échancrures (215) pratiquées dans le premier voile (21) de l'absorbeur (2).

8. Dispositif d'absorption suivant l'une quelconque des revendications 6 et 7, **caractérisé en ce que** les premier et second voiles (11, 12) de la poutre (1) divergent l'un de l'autre à partir de la base (10) de cette poutre (1).

9. Dispositif d'absorption suivant l'une quelconque des revendications 1 à 5, **caractérisé en ce que** les premier et second voiles (11, 12) de la poutre (1) sont respectivement recouverts par les premier et second voiles (21, 22) de l'absorbeur (2) en des première et seconde zones de recouvrement (217, 226) respectivement définies en bordure des premier et second voiles (21, 22) de l'absorbeur (2), et **en ce que** l'absorbeur (2) est fixé à la poutre (1) par fixation des première et seconde zones (217, 226) de recouvrement sur les premier et second voiles (11, 12) de la poutre (1).

**10.** Dispositif d'absorption suivant les revendications 5 et 9, **caractérisé en ce que** les entretoises (41) sont fixées au premier voile (21) de l'absorbeur (2) dans la première zone (217) de recouvrement.

**11.** Dispositif d'absorption suivant l'une quelconque des revendications 9 et 10, **caractérisé en ce que** les premier et second voiles (11, 12) de la poutre (1) sont sensiblement parallèles l'un à l'autre.

**12.** Dispositif d'absorption suivant l'une quelconque des revendications précédentes, **caractérisé en ce qu'**au moins l'absorbeur (2) est réalisé dans un polymère, tel qu'un polypropylène, et formé par injection.

**13.** Dispositif d'absorption suivant l'une quelconque des revendications précédentes, **caractérisé en ce que** l'absorbeur (2) présente un module d'Young compris entre 750 et 1250 MPa et **en ce que** les voiles (21, 22) de l'absorbeur (2) ont une épaisseur comprise entre 2 et 5 millimètres.

**14.** Dispositif d'absorption suivant l'une quelconque des revendications précédentes, **caractérisé en ce que** l'absorbeur (2) présente une épaisseur maximale dans un plan transversal médian (PT) de l'empilement et progressivement décroissante à distance croissante de ce plan (PT).

**15.** Dispositif d'absorption suivant l'une quelconque des revendications 1 à 3, **caractérisé en ce que** l'absorbeur (2) forme un corps creux, et **en ce que** les deux voiles (21, 22) de l'absorbeur (2) sont raccordés, à distance de la base (20), par deux parois internes (23, 24) reliées par un fond (25), le volume libre (200) défini par l'absorbeur (2) étant délimité par les parois internes (23, 24) et le fond (25).

**16.** Dispositif d'absorption suivant la revendication 15, **caractérisé en ce que** l'absorbeur (2) est réalisé dans un polymère, tel qu'un polypropylène, et formé par soufflage.

**17.** Dispositif d'absorption suivant l'une quelconque des revendications précédentes, **caractérisé en ce que** la coquille (3) est fixée sur la base (20) de l'absorbeur (2) par des moyens de fixation réversible (5), tels que des moyens d'encliquetage.

**18.** Application d'un dispositif d'absorption suivant l'une quelconque des revendications précédentes à la réalisation d'un pare-chocs de véhicule automobile présentant un effort de compression sensiblement constant de l'empilement, dans laquelle la poutre (1) est solidaire du châssis du véhicule et s'étend suivant une direction horizontale.

**Claims**

**1.** Kinetic energy absorbing device made up of a pack comprising a rigid beam (1) extending along a longitudinal dimension (L1), an absorber (2) that covers the beam (1), and an outer shell that at least partly covers the absorber (2), the pack having, viewed in transverse section with respect to the longitudinal dimension (L1), a thickness (E) extending in a central longitudinal plane (PL) of the beam (1) and a width (L2) extending at right angles to this central longitudinal plane (PL), and this device undergoing, in response to an impact of greater intensity than a predetermined minimum value, applied to the shell (3) and directed towards the beam (1), deformations of the shell (3) and of the absorber (2) that take the form of compression of the pack in its thickness (E), said device being **characterized in that** the shell (3) and the absorber (2) are made of elastically deformable materials, **in that** each element of the pack represented separately by the beam (1), absorber (2) and shell (3) has a first web (11, 21, 31), a second web (12, 22, 32), and a base (10, 20, 30), **in that** the absorber (2) and the shell (3) defining respective free volumes (200, 300) in which the beam (1) and the absorber (2) respectively are inscribed, the bases (10, 20, 30) being ordered in the direction of the thickness (E) of the pack, the first webs (11, 21, 31) being ordered in the direction of the width (L2) of the pack, on a first side (PL1) of the central longitudinal plane (PL), and the second webs (12, 22, 32) being ordered in the direction of the width (L2) of the pack on a second side (PL2) of the central longitudinal plane (PL), **in that** the first and second webs (21, 22) of the absorber (22) have first and second respective edges (211, 222) by which these webs (21, 22) are attached to the first and second webs (11, 12), respectively, of the beam (1), **in that** the base (20) of the absorber (2) is located away from the base (10) of the beam (1) in the direction of the thickness (E) of the pack, **in that** the webs (31, 32) of the shell (3) are located away from the webs (21, 22) of the absorber (22) in the direction of the width (L2) of the pack, and **in that** the shell (3) is attached to the pack in such a way as to allow deformation of its base (3) in the central longitudinal plane (PL).

2. Absorbing device according to Claim 1, **characterized in that** the shell (3) is attached by its base (3) to the base (20) of the absorber (2).

3. Absorbing device according to Claim 1 or 2, **characterized in that** the free volume (200) defined by the absorber (2) is convex, and the two webs (21, 22) of the absorber (22), have, in transverse section, respective concavities turned towards this free volume (200).

4. Absorbing device according to any one of the preceding claims, **characterized in that** it comprises spacer means (4) between the first web (21) of the absorber (2) and the first web (31) of the shell (3).

5. Absorbing device according to Claim 4, **characterized in that** the spacer means (4) comprise distance pieces (41) and a crossmember (42), the distance pieces (41) are attached to the absorber (2) and extend towards the first web (31) of the shell (3), and the crossmember (42) connects the distance pieces (41) at a distance from the absorber (2) and offers support to the first web (31) of the shell (3).

6. Absorbing device according to any one of the preceding claims, **characterized in that** the first and second webs (11, 12) of the beam (1) have respective first and second flanges (111, 122), distant from the face (10) of the beam (1) and extending in opposite transverse directions, **in that** the first and second webs (21, 22) of the absorber (2) have respective first and second flanges (213, 224) distant from the base (20) of the absorber and extending in opposite transverse directions, so as to face the first and second flanges (111, 122) of the beam (1), respectively, and **in that** the absorber (2) is attached to the beam (1) by attachment of the flanges (213, 224) of the absorber (2) to the corresponding flanges (111, 122) of the beam (1).

7. Absorbing device according to Claims 5 and 6, **characterized in that** the distance pieces (41) are supported on the first web (11) of the beam (1), are attached to the first flange (213) of the absorber (2), and pass through slots (215) in the first web (21) of the absorber (2).

8. Absorbing device according to either of Claims 6 and 7, **characterized in that** the first and second webs (11, 12) of the beam (1) diverge from each other with increasing distance from the base (10) of this beam (1).

9. Absorbing device according to any one of Claims 1 to 5, **characterized in that** the first and second webs (11, 12) of the beam (1) are covered by the first and second webs (21, 22), respectively, of the absorber (2) in first and second coverage areas (217, 226) respectively defined along the borders of the first and second webs (21, 22) of the absorber (22), and **in that** the absorber (2) is attached to the beam (1) by attachment of the first and second coverage areas (217, 226) to the first and second webs (11, 12) of the beam (1).

10. Absorbing device according to Claims 5 and 9, **characterized in that** the distance pieces (41) are attached to the first web (21) of the absorber (2) in the first coverage area (217).

11. Absorbing device according to either of Claims 9 and 10, **characterized in that** the first and second webs (11, 12) of the beam (1) are approximately mutually parallel.

12. Absorbing device according to any one of the preceding claims, **characterized in that** at least the absorber (2) is made of a polymer, such as a polypropylene, and is injection-moulded.

13. Absorbing device according to any one of the preceding claims, **characterized in that** the absorber (2) has a Young's modulus of between 750 and 1250 MPa and **in that** the webs (21, 22) of the absorber (2) are between 1 and 5 millimetres thick.

14. Absorbing device according to any one of the preceding claims, **characterized in that** the absorber (2) has a maximum thickness in a central transverse plane (PT) of the pack, decreasing progressively with increasing distance from this plane (PT).

15. Absorbing device according to any one of Claims 1 to 3, **characterized in that** the absorber (2) forms a hollow body, and **in that** the two webs (21, 22) of the absorber (2) are connected, at a distance from the base (20), by two internal walls (23, 24) connected by a base (25), the free volume (200) defined by the absorber (2) being defined by the internal walls (23, 24) and the base (25).

16. Absorbing device according to Claim 15, **characterized in that** the absorber (2) is produced in a polymer, such as a polypropylene, and is formed by blow-moulding.

17. Absorbing device according to any one of the preceding claims, **characterized in that** the shell (3) is attached to the base (20) of the absorber (2) by means of reversible attachment (5), such as snap fastening means.

18. Application of an absorbing device according to any one of the preceding claims to the production of a motor vehicle bumper having an approximately constant pack compression force, wherein the beam (1) is mounted on the vehicle chassis and extends in a horizontal direction.

**Patentansprüche**

1. Vorrichtung zur Absorption von kinetischer Energie, die aus einem aus einem sich in einer Längsrichtung (L1) erstreckenden starren Träger (1), einem den Träger (1) bedeckenden Absorber (2) und einer den Absorber (2) zumindest teilweise bedeckenden äußeren Schale (3) bestehenden Stapel gebildet wird, wobei der Stapel in einem Querschnitt bezüglich der Längsrichtung (L1) eine sich entlang einer mittleren Längsebene (PL) des Trägers (1) erstreckende Dicke und eine sich quer zu dieser mittleren Längsebene (PL) erstreckende Breite (L2) aufweist, und wobei diese Vorrichtung als Reaktion auf einen Stoß mit größerer Stärke als ein bestimmter Minimalwert, der an die Schale (3) angelegt wird und zum Träger (1) gerichtet ist, Verformungen der Schale (3) und des Absorbers (2) erfährt, die sich insbesondere in einer Komprimierung des Stapels entlang seiner Dicke (E) auswirken, **dadurch gekennzeichnet, dass** die Schale (3) und der Absorber (2) aus elastisch verformbaren Materialien hergestellt sind, jedes Element des Stapels, den der Träger (1), der Absorber (2) und die Schale (3) getrennt bilden, eine erste Scheibe (11, 21, 31), eine zweite Scheibe (12, 22, 32) und eine Basis (10, 20, 30) aufweist, der Absorber (2) und die Schale (3) jeweilige freie Volumen (200, 300) definieren, in denen sich der Träger (1) bzw. der Absorber (2) befinden, wobei die Basen (10, 20, 30) entlang der Dicke (E) des Stapels aufgestapelt sind, wobei die ersten Scheiben (11, 21, 31) auf einer ersten Seite (PL1) der mittleren Längsebene (PL) entlang der Breite (L2) des Stapels aufgestapelt sind und wobei die zweiten Scheiben (12, 22, 32) auf einer zweiten Seite (PL2) der mittleren Längsebene (PL) entlang der Breite (L2) des Stapels aufgestapelt sind, die ersten und die zweiten Scheiben (21, 22) des Absorbers (2) einen ersten bzw. zweiten Rand (211, 222) aufweisen, durch die diese Scheiben (21, 22) an der ersten bzw. zweiten Scheibe (11, 12) des Trägers (1) befestigt sind, die Basis (20) des Absorbers (2) von der Basis (10) des Trägers (1) entlang der Dicke (E) des Stapels beabstandet ist, die Scheiben (31, 32) der Schale (3) von den Scheiben (21, 22) des Absorbers (2) entlang der Breite (L2) des Stapels beabstandet sind und die Schale (3) so an dem Stapel befestigt ist, dass eine Verformung der Basis (30) in der mittleren Längsebene (PL) gestattet wird.

2. Absorptionsvorrichtung nach Anspruch 1, **dadurch gekennzeichnet, dass** die Schale (3) durch ihre Basis (30) an der Basis (20) des Absorbers (2) befestigt ist.

3. Absorptionsvorrichtung nach Anspruch 1 oder 2, **dadurch gekennzeichnet, dass** das durch den Absorber (2) definierte freie Volumen (200) konvex ist, wobei die beiden Scheiben (21, 22) des Absorbers (2) im Querschnitt jeweilige zu diesem freien Volumen (200) weisende Konkavitäten aufweisen.

4. Absorptionsvorrichtung nach einem der vorhergehenden Ansprüche, **dadurch gekennzeichnet, dass** sie Abstandsmittel (4) aufweist, die zwischen der ersten Scheibe (21) des Absorbers (2) und der ersten Scheibe 831) der Schale (3) angeordnet sind.

5. Absorptionsvorrichtung nach Anspruch 4, **dadurch gekennzeichnet, dass** die Abstandsmittel (4) Stege (41) und einen Querträger (42) aufweisen, wobei die Stege (41) am Absorber (2) befestigt sind und sich zur ersten Scheibe (31) der Schale (3) erstrecken und der Querträger (42) die Stege (41) in einem Abstand vom Absorber (2) verbindet und eine Abstützstelle für die erste Scheibe (31) der Schale (3) bietet.

6. Absorptionsvorrichtung nach einem der vorhergehenden Ansprüche, **dadurch gekennzeichnet, dass** die erste und die zweite Scheibe (11, 12) des Trägers (1) eine erste bzw. zweite Kante (111, 122), die von der Basis (10) des Trägers (1) entfernt sind und sich in entgegengesetzte Querrichtungen erstrecken, aufweisen, die erste und die zweite Scheibe (21, 22) des Absorbers (2) eine erste bzw. zweite Kante (213, 224), die von der Basis (20) des Absorbers (2) entfernt sind und sich in entgegengesetzte Querrichtungen jeweils gegenüber der ersten bzw. der zweiten Kante (111, 122) des Trägers (1) erstrecken, aufweisen, und der Absorber (2) durch Befestigung der Kanten (213, 224) des Absorbers (2) an den entsprechenden Kanten (111, 122) des Trägers (1) an dem Träger (1) befestigt ist.

7. Absorptionsvorrichtung nach den Ansprüchen 5 und 6, **dadurch gekennzeichnet, dass** sich die Stege (41) auf der ersten Scheibe (11) des Trägers (1) abstützen, an der ersten Kante (213) des Absorbers (2) befestigt sind und in der ersten Scheibe (21) des Absorbers (2) ausgebildete Aussparungen (215) durchqueren.

8. Absorptionsvorrichtung nach einem der Ansprüche 6 und 7, **dadurch gekennzeichnet, dass** die erste und die zweite Scheibe (11, 12) des Trägers (1) von der Basis (10) dieses Trägers (1) aus voneinander divergieren.

9. Absorptionsvorrichtung nach einem der Ansprüche 1 bis 5, **dadurch gekennzeichnet, dass** die erste und die zweite Scheibe (11, 12) des Trägers (1) in einer ersten bzw. zweiten Abdeckungszone (217, 226), die jeweils entlang der ersten und zweiten Scheibe (21, 22) des Absorbers (2) definiert werden, durch die erste bzw. zweite Scheibe (21, 22) des Absorbers (2) bedeckt wird und der Absorber (2) durch Befestigung der ersten und der zweiten Abdeckungszone (217, 226) an der ersten und zweiten Scheibe (11, 12) des Trägers (1) befestigt ist.

10. Absorptionsvorrichtung nach den Ansprüchen 5 bis 9, **dadurch gekennzeichnet, dass** die Stege (41) in der ersten Abdeckungszone (217) an der ersten Scheibe (21) des Absorbers (2) befestigt sind.

11. Absorptionsvorrichtung nach einem der Ansprüche 9 und 10, **dadurch gekennzeichnet, dass** die erste und die zweite Scheibe (11, 12) des Trägers (1) im Wesentlichen parallel zueinander verlaufen.

12. Absorptionsvorrichtung nach einem der vorhergehenden Ansprüche, **dadurch gekennzeichnet, dass** mindestens der Absorber (2) aus einem Polymer, wie zum Beispiel einem Polypropylen, hergestellt und durch Spritzen geformt ist.

13. Absorptionsvorrichtung nach einem der vorhergehenden Ansprüche, **dadurch gekennzeichnet, dass** der Absorber (2) ein Elastizitätsmodul zwischen 750 und 1250 MPa aufweist und die Scheiben (21, 22) des Absorbers (2) eine Dicke zwischen 2 und 5 Millimeter aufweisen.

14. Absorptionsvorrichtung nach einem der vorhergehenden Ansprüche, **dadurch gekennzeichnet, dass** der Absorber (2) eine maximale Dicke in einer mittleren Querebene (PT) des Stapels aufweist, die mit wachsendem Abstand von dieser Ebene (PT) allmählich abnimmt.

15. Absorptionsvorrichtung nach einem der Ansprüche 1 bis 3, **dadurch gekennzeichnet, dass** der Absorber (2) einen Hohlkörper bildet und dass die beiden Scheiben (21, 22) des Absorbers (2) in einem Abstand zur Basis (20) durch zwei durch einen Boden (25) verbundene Innenwände (23, 24) von der Basis (20) entfernt verbunden sind, wobei das durch den Absorber (2) definierte Volumen (200) durch die Innenwände (23, 24) und den Boden (25) begrenzt wird.

16. Absorptionsvorrichtung nach Anspruch 15, **dadurch gekennzeichnet, dass** der Absorber (2) aus einem Polymer, wie zum Beispiel einem Polypropylen hergestellt und durch Blasformen geformt wird.

17. Absorptionsvorrichtung nach einem der vorhergehenden Ansprüche, **dadurch gekennzeichnet, dass** die Schale (3) durch lösbare Befestigungsmittel (5), wie zum Beispiel Rastmittel, an der Basis (20) des Absorbers (2) befestigt ist.

18. Anwendung einer Absorptionsvorrichtung nach einem der vorhergehenden Ansprüche auf die Herstellung eines Stoßfängers für ein Kraftfahrzeug, die eine im Wesentlichen konstante Druckkraft aufweist, wobei der Träger (1) fest mit dem Chassis des Fahrzeugs verbunden ist und sich in einer horizontalen Richtung erstreckt.

Fig.1

Fig.2

Fig 4

Fig 3

Fig 5

_Fig.6_

_Fig.7_

_Fig. 8_

_Fig. 9 A_      _Fig. 9 B_      _Fig. 9 C_

_Fig. 10 A_

_Fig. 10 B_

Fig. 11 A

Fig. 11 B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3938851 A